# EUROPEAN PATENT SPECIFICATION

(11) **EP 3 883 852 B1**
(45) Date of publication and mention of the grant of the patent: **13.03.2024**
(21) Application number: 19797778.8
(22) Date of filing: 30.10.2019
(51) Int. Cl.: B64U 70/20, B64U 80/70, B64U 80/82, B64D 5/00

(54) **RECOVERING AN UNMANNED VEHICLE**
RÜCKGEWINNUNG EINES UNBEMANNTEN FAHRZEUGS
RÉCUPÉRATION D'UN VÉHICULE SANS PILOTE

(30) Priority: 23.11.2018 EP 18275179; 23.11.2018 GB 201819093
(43) Date of publication of application: 29.09.2021
(73) Proprietor: BAE SYSTEMS plc, London SW1Y 5AD (GB)
(72) Inventor: HAMILTON, Alexander Samson, Preston Lancashire PR4 1AX (GB)
(74) Representative: BAE SYSTEMS plc Group IP Department
(86) International application number: PCT/GB2019/053064
(87) International publication number: WO 2020/104766

(56) References cited:
- FR-A1- 2 521 098
- FR-A1- 2 866 420
- US-A1- 2010 192 831
- US-A1- 2010 217 526
- US-A1- 2017 349 283
- US-B1- 7 152 828

## Description

### FIELD OF THE INVENTION

The present invention relates to an apparatus and system for recovering an unmanned vehicle.

### BACKGROUND ART

Systems for releasing and recovering unmanned air vehicles (UAVs) in-flight are known. Present methods for recovery include trailing a hook from the rear of the mothership, which is snagged by the daughter UAVs. The hook and UAV is then reeled into the mothership. However, in this example, once snagged the daughter UAV is not controllable, and therefore there is a risk of damage to both the mothership and the daughter UAV.

Cooperative engagement between a plurality of unmanned assets to achieve goals is also known. Particularly, there are systems whereby high value assets can remain above a cloudbase while low value assets can transmit images back to the high value asset while operating below the cloudbase.

US2010/192831A1 relates to a submarine for launching a secondary underwater vehicle. US2017/349283A1 relates to in-flight retrieval of unmanned aerial vehicles by an aircraft. A tether system with a capture connector is used to draw an unmanned aerial vehicle into a storage area from outside the turbulent airflow around the aircraft. US2010/217526A1 relates to using light patterns to facilitate autonomous dynamic spatial positioning of a second vehicle in relation to a first vehicle.

### SUMMARY

According to an aspect of the present invention, there is provided an apparatus for recovering an unmanned vehicle according to claim 1. According to another aspect of the present invention, there is provided an aircraft comprising an apparatus according to the first aspect. According to another aspect of the present invention, there is provided a system vehicle according to claim 11. Optional features are set out in the dependent claims.

According to an example not forming part of the present invention, there is provided a method of recovering an unmanned vehicle, comprising:
extending a tether through an opening in a container, the tether comprising at least one light source;
identifying the at least one light source and using the at least one light source to guide a probe of the unmanned vehicle to engage with the tether; and
reeling in the tether to draw the unmanned vehicle into the container. The method may further comprise extending at least one retractable guide from at least one wall of the container to increase the width of the opening.

The method may further comprise:
determining the position of the unmanned vehicle relative to the opening; and
transmitting control signals through the tether to control control surfaces of the unmanned vehicle such that it flies into the container.

According to an example not forming part of the present invention, there is provided a method of recovering an unmanned vehicle, comprising:
identifying at least one light source coupled to a tether extending from an opening of a container; and
guiding a probe to engage with the tether using the at least one light source.

The method may comprise:
receiving control signals through the tether; and
controlling control surfaces of the unmanned vehicle using the control signals to move the unmanned vehicle into the opening.

It will be appreciated that features described in relation to one aspect of the present invention can be incorporated into other aspects of the present invention, insofar as they fall within the scope defined by the appended claims. For example, an apparatus of the invention can incorporate features described in this disclosure with reference to a method.

### BRIEF DESCRIPTION OF THE DRAWINGS

Embodiments of the invention will now be described by way of example only and with reference to the accompanying drawings.
Figure 1 is a system diagram of a system for locating a target;
Figure 2 is a system diagram of a system for recovering an unmanned air vehicle according to an embodiment of the present invention;
Figure 3 is a cross-sectional diagram of an apparatus for recovering an unmanned air vehicle according to an embodiment of the present invention; and
Figure 4 is a cross-sectional diagram of an apparatus for recovering an unmanned air vehicle according to another embodiment of the present invention.

For convenience and economy, the same reference numerals are used in different figures to label identical or similar elements.

### DETAILED DESCRIPTION

Embodiments described herein relate to recovering an unmanned vehicle, such as an unmanned air vehicle (UAV), unmanned ground vehicle (UGV), or unmanned watercraft. Unmanned vehicles are recovered so that they can be transported long distances efficiently or refuelled and/or rearmed.

Herein, the word "mothership" is used to refer to a vessel or craft for transporting, releasing and recovering unmanned vehicles. In an exemplary embodiment, the mothership is itself an unmanned vehicle, albeit larger than the unmanned vehicles that it transports. However, in other embodiments the mothership is a manned vehicle, such as a cargo aircraft.

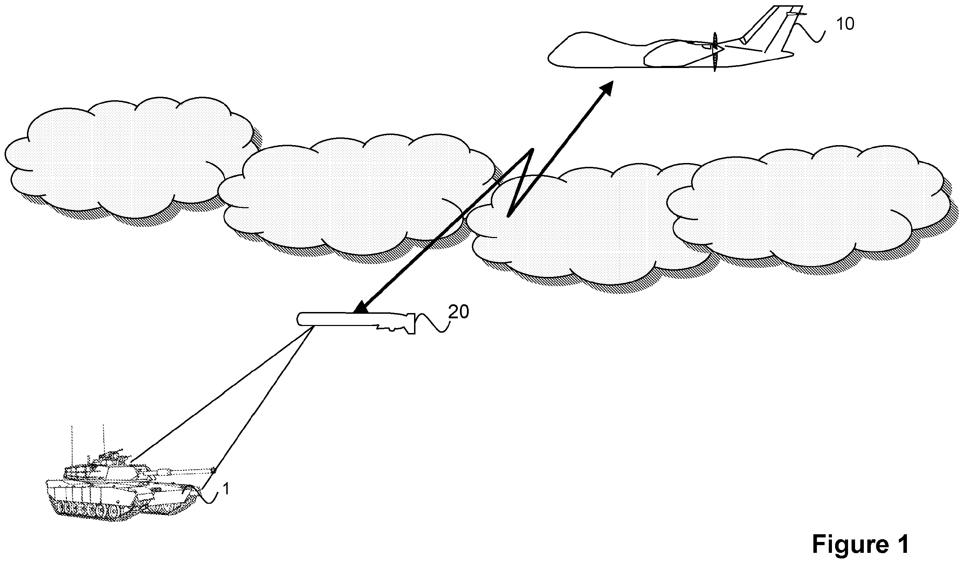

Figure 1 shows a system diagram of a typical deployment of the present invention. Here, a mothership 10 flies above the cloudbase, so as not to expose itself to small arms fire. To observe or attack targets 1, an unmanned vehicle 20, such as an unmanned air vehicle (UAV), is released from the mothership 10 and flies below the cloudbase. While only a single unmanned vehicle 20 is shown here, in some implementations a plurality of unmanned vehicles 20 are released. The plurality of unmanned vehicles 20 communicate with the mothership 10 in order to triangulate the target 1 for precision attack or for later analysis of enemy positions.

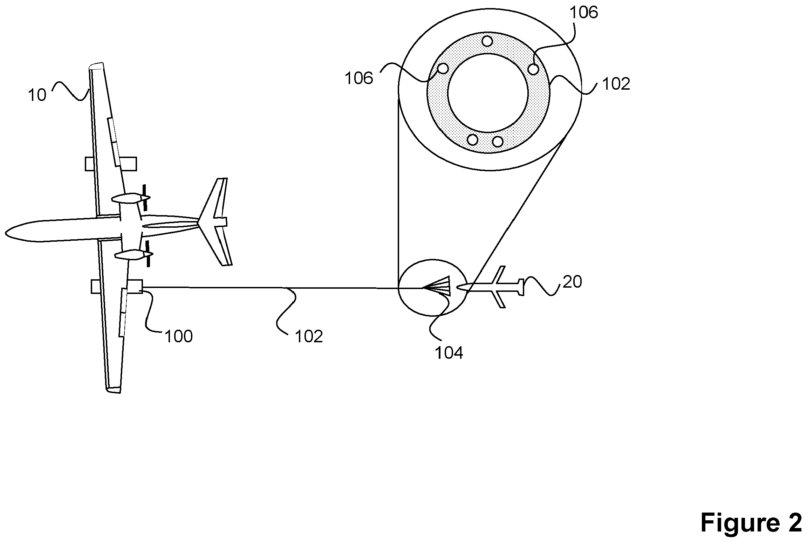

However, the unmanned vehicles 10 are relatively small, and carry relatively little fuel and armaments. Therefore, they need to be recovered by the mothership 10 for transport back to an airfield, or to be refuelled and/or rearmed during a mission. Figure 2 shows a recovery apparatus 100 for recovering an unmanned vehicle 20. In this embodiment, the recovery apparatus 100 is in the form of a pod attached to the wing of the mothership. The mothership 10 may have a plurality of recovery apparatuses 100 attached, for example one under each wing. However, in other embodiments, the recovery apparatus 100 is integrated with the body of the mothership 10.

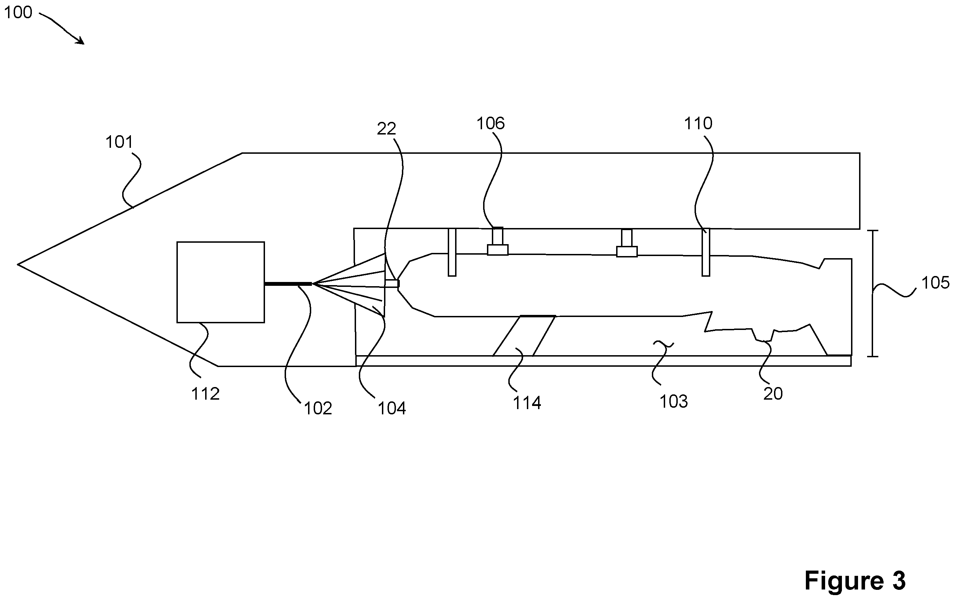

Here, the recovery apparatus 10 includes a retractable tether 102, the operation of which will be described in more reference to Figure 3. In the embodiment shown here, the tether 102 has a drogue 104 attached to one end to steady the tether in the airflow.

The free end of the tether 102 has a plurality of lights 106 embedded therein. The lights 106 are arranged in a pattern. In one embodiment, there is only one light 106 in the end of the tether 102. In one embodiment, the lights 106 are be embedded in the tip of the tether 102. In another embodiment, the lights 106 are embedded in the drogue 104. The lights 106 may be LEDs, for example, but any appropriate light source may be used. The lights 106 may be of a wavelength not detectable by the human eye, for example infrared, to minimise the presence of the mothership 10 in a combat environment. In embodiments where there are a plurality of lights 106, each light 106 may be of a different colour, or frequency, to the others.

The unmanned vehicle 20 couples to the end of the tether 102 having the drogue 104. In the embodiment shown, the nose of the unmanned vehicle 20 engages with the tether 102. In other embodiments, the unmanned air vehicle 20 includes a probe (fixed or extendable) for engaging with the tether 102.

The unmanned vehicle 20 comprises a sensor, for example an optical sensor, and a processor. The sensor scans the scene in front of the unmanned vehicle 20 to locate the lights 106. Once the lights 106 on the tether 102 are detected, the processor generates control signals to control control surfaces of the unmanned vehicle 20 such that it moves to engage with the tether 102. The position of each light 106 (or the light 106, in the case where there is only one) relative to a boresight of the sensor is used to determine the position of the unmanned vehicle 20 relative to the tether 102. For example, if the lowest light 106 in the pattern is greater than a threshold distance below the boresight when the unmanned vehicle 20 is travelling horizontally, then the processor is able to determine that the unmanned vehicle 20 is too high relative to the tether 102 and controls the unmanned vehicle 20 to descend.

In some embodiments, the tether 102 includes electrical wiring. On engaging with the tether 102, the unmanned vehicle 20 is able to communicate with the mothership 10. In other words, the unmanned vehicle 20 includes a receiver for receiving signals from the mothership 10. The signals may include control signals for controlling control surfaces of the unmanned vehicle 20. As the mothership 10 knows its own course, altitude and speed, it is more efficient for the mothership 10 to control the unmanned aircraft 20 to enter the recovery apparatus 100. For example, the mothership 10 (or a processor of a recovery apparatus 100) controls an unmanned air vehicle to fly into a container of the recovery apparatus 100 using signals transmitted through the tether 102.

In some embodiments, the unmanned aircraft 20 transmits its location relative to the mothership 10 to a receiver onboard the mothership 10. The signal having the location information is transmitted via the electrical wiring in the tether 102. Wired transmissions of data are preferable over wireless transmissions where information is time sensitive (e.g. instantaneous location of a moving aircraft), as wired systems have lower latency and faster data transmission speeds. The location information may include the unmanned vehicle's course, speed and altitude, as gathered by sensors onboard the unmanned vehicle 20.

In other embodiments, the mothership 10 includes sensors, such as a video camera, configured to detect the location of the unmanned vehicle 20 relative to the mothership 10. This information is used in generating the control signals to control the unmanned vehicle 20 to move into the container of the apparatus 100.

Figure 3 shows a cross-sectional view of a recovery apparatus 100 according to an embodiment of the present invention. In this configuration, the unmanned vehicle 20 is stored within the recovery apparatus 100 prior to release (or after recovery). The recovery apparatus 100 includes a housing 101. The housing 101 is aerodynamically shaped. The housing 101 is an aircraft pod having attachment points for coupling to a hardpoint of the mothership 10, or otherwise integrated with the external structure of the mothership 10. In some embodiments, the housing 101 is designed to be strapped or otherwise affixed to the inside of a cargo bay of the mothership 10. In examples not presently being claimed, the recovery apparatus 100 is a distributed system, and therefore the housing 101 is the body of the mothership 10.

A container 103 is installed within the housing 101. The container 103 may be shaped to fit a single unmanned vehicle 20. Alternatively, the container 103 may be configured to store a plurality of unmanned vehicles 20. The container 103 is substantially cuboidal, having an opening 105 on one side. The opening 105 optionally has a door (or flap) to expose the opening during launch or recovery of an unmanned vehicle 20, although this is not shown in the Figure. The opening 105 has a width and height optimally suited for receiving at least one unmanned vehicle 20.

Parts of the unmanned vehicle 20, such as the wings or tail surfaces, may be retractable or foldable to reduce the volume occupied in the container 103 by the unmanned vehicle 20.

The recovery apparatus 100 includes at least one grab 110. The purpose of the grab 110 is to secure the unmanned vehicle 20 within the container 103, and thereby prevent its movement. This aids in refuelling and rearming the unmanned vehicle 20 when the unmanned vehicle 20 is inside the container 103. The embodiment shown in Figure 3 includes two grabs 110, one for securing the front of the unmanned vehicle 20 and one for securing the rear. The grab 110 may be, for example, a pincer that retracts around the unmanned vehicle's body when it is in the container 103. In another embodiment, the grab 110 is a strong magnet that attracts the body of the unmanned vehicle 20 and prevents its movement within the container 103.

In the embodiment shown in Figure 3, a fuel line 106 extends into the container 103. The fuel line 106 may be retractable, but may also be fixed. The open end of the fuel line 106 is aligned with a refuelling point on the unmanned vehicle 20 when the unmanned vehicle 20 is in the container 103. The open end of the fuel line 106 may be magnetically attracted to the refuelling point on the unmanned vehicle 20. There may be a plurality of fuel lines 106 extending into the container 103 such that a single unmanned vehicle 20 can be refuelled from multiple points and/or multiple unmanned vehicles 20 can be refuelled simultaneously.

In the embodiment shown in Figure 3, a catapult 114 is used to launch the unmanned vehicle 20 from the container 103 through the opening 105. The catapult may be magnetically driven, or driven by an electric motor. In an alternative embodiment, a drogue, or other retardation device, attached to the rear of the unmanned vehicle 20 is released into the airflow behind the mothership 10 in order to pull the unmanned vehicle 20 from the container 103.

In the embodiment shown here, the unmanned vehicle 20 couples to the tether 102 by inserting a probe 22 into the free end of the tether 102. The tether 102 is then reeled in, or retracted, using a winch 112. The tether 102 is wrapped around a spool of the winch 112 as it is withdrawn.

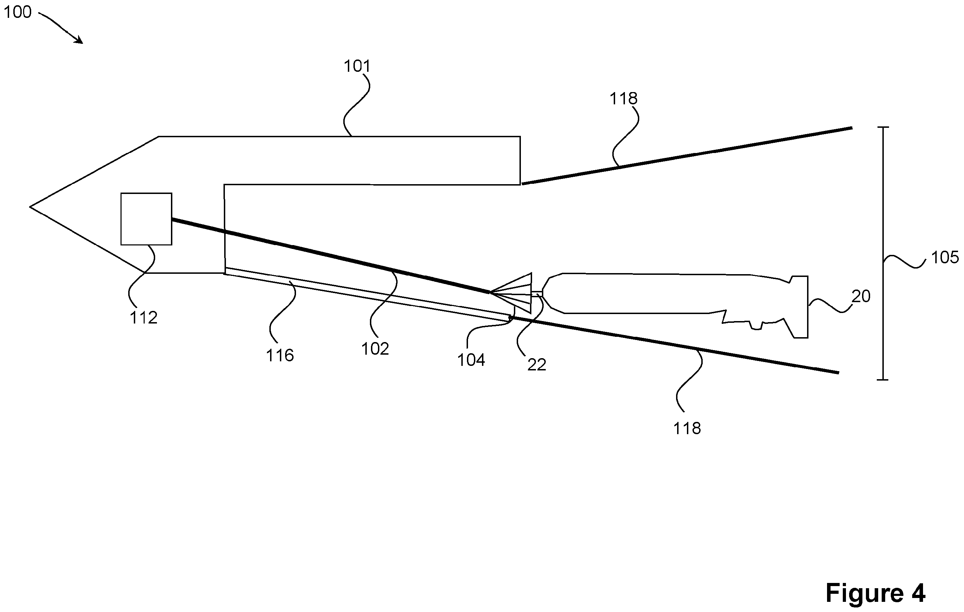

A further embodiment is shown in Figure 4. Here, the lower wall 116 of the housing 101 (that is, the wall perpendicular to the opening 105, or parallel to the mothership 10), is hinged. In order to expand the opening 105, the lower wall 116 is pivoted about the hinge such that it lies at an oblique angle to the upper wall. In another embodiment, the top wall is also hinged in order to expand the opening 105, either instead of or in addition to the lower wall 116.

Further in the embodiment shown in Figure 4, a flexible net 118 is extendable from the container 103 to expand the opening 105 and the container 103. Here, the net 118 is conical when extended. The net 118 tends to increase the diameter of the opening 105 and tends to reduce turbulence in the vicinity of the fixed part of the container 103. Reducing turbulence tends to make it easier to fly the unmanned vehicle 20 into the relative small container 103.

Reference should be made to the claims for determining the true scope of the present disclosure. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

## Claims

1. An apparatus (100) for recovering an unmanned vehicle (20), comprising:
a pod (101) configured to be coupled to a hardpoint of an aircraft (10);
a container (103) for storing at least one unmanned vehicle, the container having an opening (105) for receiving an unmanned vehicle and housed within the pod;
an extendable tether (102), a first end of the tether being coupled to the inside of the container, a second end of the tether being arranged to pass through the opening; and
at least one light source (106) affixed to the second end of the tether.

2. The apparatus according to claim 1, wherein the second end of the tether comprises a drogue (104).

3. The apparatus according to claim 1 or claim 2, further comprising a grab (110) within the container for restricting movement of the unmanned vehicle.

4. The apparatus according to any one of the preceding claims, further comprising a refuelling connection extendable into the container for coupling to the unmanned vehicle.

5. The apparatus according to any one of the preceding claims, further comprising:
a transmitter;
a processor; and
a wired connection disposed within the tether for electrically connecting an unmanned vehicle to the transmitter,
wherein the processor is configured to determine the location of the unmanned vehicle relative to the opening and to generate control signals to control control surfaces of the unmanned vehicle such that the unmanned vehicle moves into the opening,
wherein the transmitter is configured to send the control signals to the unmanned vehicle through the wired connection.

6. The apparatus according to claim 5, further comprising a receiver,
wherein the receiver is configured to receive positional information from the unmanned vehicle, and wherein the processor is configured to use the positional information to determine the location of the unmanned vehicle relative to the opening.

7. The apparatus according to any one of the preceding claims, comprising:
at least three walls, wherein first and second walls are arranged in parallel and a third wall is arranged orthogonal to the first and second walls; and
a hinge for coupling the second wall to the third wall, about which the second wall of the container is arranged to pivot such that in a first configuration of the second wall the opening is narrow and in a second configuration of the second wall the opening is wide.

8. The apparatus according to any one of the preceding claims, comprising at least one retractable guide (118) extendable from at least one wall of the container to increase the width of the opening.

9. The apparatus according to claim 8, wherein the retractable guide is a conical net.

10. An aircraft (10) comprising the apparatus (100) according to any one of the preceding claims.

11. A system comprising the apparatus (100) according to any one of claims 1 to 9, and an unmanned vehicle (20), the unmanned vehicle comprising:
a probe for engaging with the extendable tether extending from the container, and the unmanned vehicle being configured to detect the at least one light source on the extendable tether and use the at least one light source to engage with the tether.

12. The system according to claim 11, comprising a receiver configured to receive control signals through the extendable tether and wherein control surfaces of the unmanned vehicle are configured to be controlled according to the received control signals.

## Patentansprüche

1. Vorrichtung (100) zum Bergen eines unbemannten Fahrzeugs (20), umfassend:
eine Kapsel (101), die konfiguriert ist, um mit einem Festpunkt eines Luftfahrzeugs (10) gekoppelt zu werden;
einen Container (103) zum Lagern mindestens eines unbemannten Fahrzeugs, wobei der Container eine Öffnung (105) zum Aufnehmen eines unbemannten Fahrzeugs aufweist und innerhalb der Kapsel untergebracht ist;
ein ausziehbares Halteseil (102), wobei ein erstes Ende des Halteseils mit der Innenseite des Containers verbunden ist und ein zweites Ende des Halteseils so angeordnet ist, dass es durch die Öffnung verläuft; und
mindestens eine Lichtquelle (106), die an dem zweiten Ende des Halteseils befestigt ist.

2. Vorrichtung nach Anspruch 1, wobei das zweite Ende des Halteseils einen Fangtrichter (104) umfasst.

3. Vorrichtung nach Anspruch 1 oder 2, ferner umfassend einen Greifer (110) innerhalb des Containers zum Begrenzen der Bewegung des unbemannten Fahrzeugs.

4. Vorrichtung nach einem der vorstehenden Ansprüche, ferner umfassend eine in den Container ausfahrbare Betankungsverbindung zum Koppeln mit dem unbemannten Fahrzeug.

5. Vorrichtung nach einem der vorhergehenden Ansprüche, ferner umfassend:
einen Sender;
einen Prozessor; und
eine drahtgebundene Verbindung, die innerhalb des Halteseils angeordnet ist, um ein unbemanntes Fahrzeug elektrisch mit dem Sender zu verbinden,
wobei der Prozessor konfiguriert ist, um die Position des unbemannten Fahrzeugs relativ zu der Öffnung zu bestimmen und Steuersignale zu erzeugen, um Steuerflächen des unbemannten Fahrzeugs derart zu steuern, dass sich das unbemannte Fahrzeug in die Öffnung bewegt,
wobei der Sender konfiguriert ist, um die Steuersignale durch die drahtgebundene Verbindung an das unbemannte Fahrzeug zu senden.

6. Vorrichtung nach Anspruch 5, ferner umfassend einen Empfänger, wobei der Empfänger konfiguriert ist, um Positionsinformationen von dem unbemannten Fahrzeug zu empfangen, und wobei der Prozessor konfiguriert ist, um die Positionsinformationen zu verwenden, um die Position des unbemannten Fahrzeugs relativ zu der Öffnung zu bestimmen.

7. Vorrichtung nach einem der vorhergehenden Ansprüche, umfassend:
mindestens drei Wände, wobei eine erste und eine zweite Wand parallel angeordnet sind und eine dritte Wand orthogonal zu der ersten und der zweiten Wand angeordnet ist; und
ein Scharnier zum Koppeln der zweiten Wand mit der dritten Wand, um welches die zweite Wand des Containers so angeordnet ist, dass sie derart schwenkt, dass in einer ersten Konfiguration der zweiten Wand die Öffnung schmal ist und in einer zweiten Konfiguration der zweiten Wand die Öffnung weit ist.

8. Vorrichtung nach einem der vorstehenden Ansprüche, umfassend mindestens eine einziehbare Führung (118), die aus mindestens einer Wand des Containers ausfahrbar ist, um die Breite der Öffnung zu vergrößern.

9. Vorrichtung nach Anspruch 8, wobei die einziehbare Führung ein konisches Netz ist.

10. Flugzeug (10), umfassend die Vorrichtung (100) nach einem der vorstehenden Ansprüche.

11. System, umfassend die Vorrichtung (100) nach einem der Ansprüche 1 bis 9 und ein unbemanntes Fahrzeug (20), wobei das unbemannte Fahrzeug umfasst:
eine Sonde zum Eingreifen in das ausfahrbare Halteseil, das sich aus dem Container erstreckt, und wobei das unbemannte Fahrzeug konfiguriert ist, um die mindestens eine Lichtquelle auf dem ausziehbaren Halteseil zu erkennen und die mindestens eine Lichtquelle zu verwenden, um in die Halterung einzugreifen.

12. System nach Anspruch 11, umfassend einen Empfänger, der konfiguriert ist, um Steuersignale durch das ausfahrbare Halteseil zu empfangen, und wobei Steuerflächen des unbemannten Fahrzeugs konfiguriert sind, um gemäß den empfangenen Steuersignalen gesteuert zu werden.

## Revendications

1. Appareil (100) permettant de récupérer un véhicule sans pilote (20), comprenant :
une nacelle (101) conçue pour être accouplée à un point d'attache d'un aéronef (10) ;
un conteneur (103) pour stocker au moins un véhicule sans pilote, le conteneur ayant une ouverture (105) pour recevoir un véhicule sans pilote et logé à l'intérieur de la nacelle ;
un câble d'attache extensible (102), une première extrémité du câble d'attache étant accouplée à l'intérieur du conteneur, une seconde extrémité du câble d'attache étant agencée pour passer à travers l'ouverture ; et
au moins une source de lumière (106) fixée à la seconde extrémité du câble d'attache.

2. Appareil selon la revendication 1, dans lequel la seconde extrémité du câble d'attache comprend un parachute de freinage (104).

3. Appareil selon la revendication 1 ou la revendication 2, comprenant en outre un grappin (110) à l'intérieur du conteneur pour restreindre le mouvement du véhicule sans pilote.

4. Appareil selon l'une quelconque des revendications précédentes, comprenant en outre un raccord de ravitaillement extensible dans le conteneur pour l'accouplement au véhicule sans pilote.

5. Appareil selon l'une quelconque des revendications précédentes, comprenant en outre :
un émetteur ;
un processeur ; et
une connexion filaire disposée à l'intérieur du câble d'attache pour connecter électriquement un véhicule sans pilote à l'émetteur,
dans lequel le processeur est configuré pour déterminer l'emplacement du véhicule sans pilote par rapport à l'ouverture et pour générer des signaux de commande pour commander des surfaces de commande du véhicule sans pilote de telle sorte que le véhicule sans pilote se déplace dans l'ouverture,
dans lequel l'émetteur est configuré pour envoyer les signaux de commande au véhicule sans pilote à travers la connexion filaire.

6. Appareil selon la revendication 5, comprenant en outre un récepteur, dans lequel le récepteur est configuré pour recevoir des informations de position du véhicule sans pilote, et dans lequel le processeur est configuré pour utiliser les informations de position pour déterminer l'emplacement du véhicule sans pilote par rapport à l'ouverture.

7. Appareil selon l'une quelconque des revendications précédentes, comprenant :
au moins trois parois, dans lequel de première et deuxième parois sont agencées parallèlement et une troisième paroi est agencée orthogonalement aux première et deuxième parois ; et
une charnière pour coupler la deuxième paroi à la troisième paroi, autour de laquelle la deuxième paroi du conteneur est agencée pour pivoter de telle sorte que dans une première configuration de la deuxième paroi, l'ouverture est étroite et dans une deuxième configuration de la deuxième paroi, l'ouverture est large.

8. Appareil selon l'une quelconque des revendications précédentes, comprenant au moins un guide rétractable (118) extensible depuis au moins une paroi du conteneur pour augmenter la largeur de l'ouverture.

9. Appareil selon la revendication 8, dans lequel le guide rétractable est un filet conique.

10. Aéronef (10) comprenant l'appareil (100) selon l'une quelconque des revendications précédentes.

11. Système comprenant l'appareil (100) selon l'une quelconque des revendications 1 à 9, et un véhicule sans pilote (20), le véhicule sans pilote comprenant :
une sonde destinée à venir en prise avec le câble d'attache extensible s'étendant à partir du conteneur, et le véhicule sans pilote étant configuré pour détecter la ou les sources de lumière sur le câble d'attache extensible et utiliser la ou les sources de lumière pour venir en prise avec le câble d'attache.

12. Système selon la revendication 11, comprenant un récepteur configuré pour recevoir des signaux de commande à travers le câble d'attache extensible et dans lequel des surfaces de commande du véhicule sans pilote sont configurées pour être commandées en fonction des signaux de commande reçus.
